# EUROPÄISCHE PATENTSCHRIFT

(11) **EP 1 459 001 B1**
(45) Veröffentlichungstag und Bekanntmachung des Hinweises auf die Patenterteilung: **26.12.2007**
(21) Anmeldenummer: 02792926.4
(22) Anmeldetag: 06.12.2002
(51) Int. Cl.: F16K 31/126, F16K 11/044

(54) **KÄLTEMASCHINE MIT MEHRWEGEVENTIL**
REFRIGERATION UNIT COMPRISING A MULTIWAY VALVE
MACHINE FRIGORIFIQUE COMPRENANT UNE SOUPAPE A VOIES MULTIPLES

(30) Priorität: 19.12.2001 DE 10162499
(43) Veröffentlichungstag der Anmeldung: 22.09.2004
(73) Patentinhaber: BSH Bosch und Siemens Hausgeräte GmbH, 81739 München (DE)
(72) Erfinder: WENNING, Udo, 89537 Giengen/Brenz (DE); NEUMANN, Michael, 89537 Giengen/Brenz (DE); EBERHARDT, Hans-Frieder, 89537 Giengen-Burgberg (DE)
(86) Internationale Anmeldenummer: PCT/EP2002/013880
(87) Internationale Veröffentlichungsnummer: WO 2003/052309

(56) Entgegenhaltungen:
- DE-A- 3 316 258
- FR-A- 672 776
- GB-A- 2 027 849
- US-A- 2 885 173
- BRUESEWITZ M: "ELEKTROCHEMISCHE AKTOREN" F & M FEINWERKTECHNIK MIKROTECHNIK MIKROELEKTRONIK, CARL HANSER GMBH & CO, DE, Bd. 106, Nr. 7/8, Juli 1998 (1998-07), Seiten 527-530, XP000847002 ISSN: 0944-1018

## Beschreibung

Die vorliegende Erfindung betrifft eine Kältemaschine, in deren Kältemittelkreislauf ein Mehrwegeventil eingesetzt ist. Derartige Mehrwegeventile bzw. Kältemaschinen kommen z.B. in Kältegeräten zum Einsatz, die mehrere jeweils durch einen eigenen Verdampfer auf unabhängig voneinander einstellbare Temperaturen regelbare Kühlfächer aufweisen; sie dienen dort zum Aufteilen eines von einem einzelnen Verdichter kommenden Kältemittelstroms auf einen oder mehrere Verdampfer. Herkömmlicherweise sind derartige Mehrwegeventile meist als Magnetventile ausgeführt, bei denen ein Schließorgan aus einem ferromagnetischen Material durch Einwirkung des magnetischen Feldes eines Elektromagneten zwischen zwei verschiedenen Ruhepositionen umgeschaltet wird, in denen es jeweils einen von zwei möglichen Wegen des Kältemittels durch das Ventil blockiert. Um eine gute Dichtigkeit des Magnetventils in seinen verschiedenen Schaltstellungen zu erzielen, muss das Schließorgan in Ruhe mit einer nicht zu geringen Kraft gegen seinen Sitz gedrückt werden; diese Kraft muss beim Umschalten des Ventils überwunden werden, um das Schließorgan in eine neue Stellung zu bringen. Je stärker diese Schließkraft ist, um so größer, kräftiger und dementsprechend teurer ist der hierfür benötigte Elektromagnet.

Eine Aufgabe der vorliegenden Erfindung ist, eine Kältemaschine mit einem Mehrwegeventil anzugeben, bei dem das Schließorgan ohne den Einsatz einer Magnetkraft umschaltbar ist; eine weitere Aufgabe ist, ein Mehrwegeventil anzugeben, das preiswert in großen Mengen gefertigt werden kann.

Die Aufgabe wird gelöst durch eine Kältemaschine mit dem Merkmal des Anspruchs 1.

Anstelle von Magnetkraft nutzt das bei der Erfindung eingesetzte Mehrwegeventil zum Antrieb der Bewegung der Schließorgane die Verformung einer unter der Wirkung eines Steuerdrucks streck- und stauchbaren Zelle.

Ein reversibler Gasgenerator und -absorber, der als Quelle für den Steuerdruck fungiert, kann extern, außerhalb der Zelle oder des Ventilgehäuses, oder auch intern, innerhalb der Zelle, angeordnet sein.

Die sich beim Stauchen und Strecken der Zelle gegenläufig bewegenden Enden derselben können zum Antreiben gegenläufiger Bewegungen eines ersten und eines zweiten Schließorgans des Mehrwegeventils eingesetzt werden. In diesem Fall ist die Zelle zweckmäßigerweise an einer zwischen diesen beiden Enden gelegenen Stelle mit dem Gehäuse verbunden.

Um die Struktur des Ventils einfach zu halten und keine Umlenkglieder oder Hebel für die Übertragung der Bewegung der Enden der Zelle auf die Schließorgane einsetzen zu müssen, sind die dem ersten bzw. zweiten Schließorgan zugeordneten Ventilsitze in einer gleichen Seitenwand des Gehäuses angeordnet.

Alternativ besteht die Möglichkeit, von den zwei in Streckrichtung entgegengesetzten Enden der Zelle eines mit dem Gehäuse zu verbinden und das andere an ein erstes und ein zweites Schließorgan zu koppeln. In diesem Falle ergibt sich eine einfache Struktur des Mehrwegeventils, wenn die dem ersten und zweiten Schließorgan zugeordneten Ventilsitze in einander gegenüberliegenden Seitenwänden des Gehäuses angeordnet sind.

Die Zelle ist vorzugsweise als Balg, d.h. mit die zwei Enden verbindenden gewellten Seitenwänden ausgebildet.

Weitere Merkmale und Vorteile der Erfindung ergeben sich aus der nachfolgenden Beschreibung von Ausführungsbeispielen mit Bezug auf die beigefügten Figuren. Es zeigen:
- Figs. 1 und 2: eine Zelle für ein erfindungsgemäßes Mehrwegeventil, einmal in einem gestreckten und einmal in einem gestauchten Zustand; und
- Figs. 3 bis 6: schematische Beispiele von erfindungsgemäßen Mehrwegeventilen.

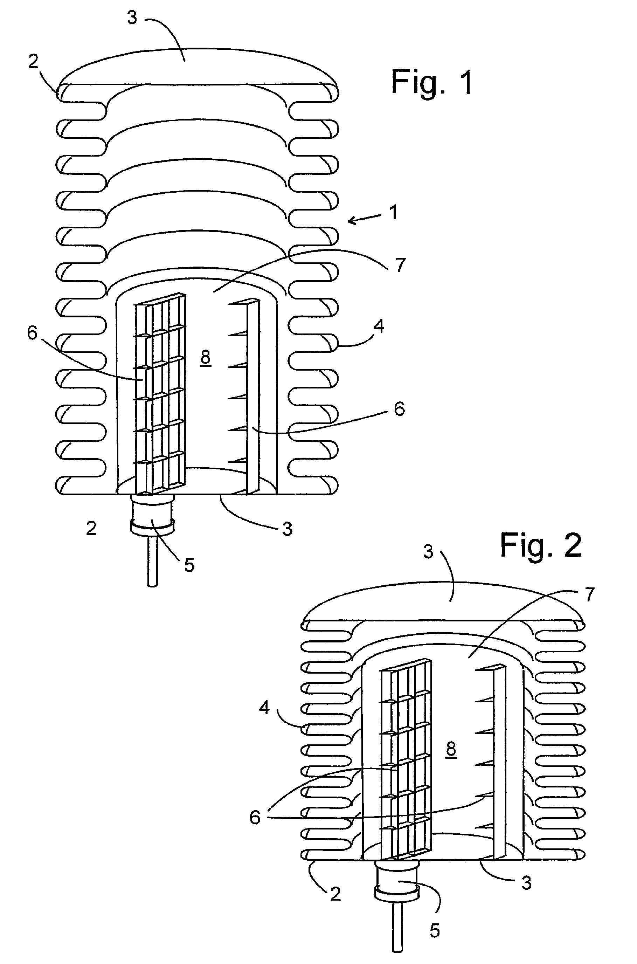

Fig. 1 zeigt einen Schnitt durch eine für das erfindungsgemäße Mehrwegeventil verwendbare Zelle. Die hermetisch dichte äußere Hülle der Zelle 1 ist als ein Wellbalg 2 aus Metall ausgebildet, mit zwei entgegengesetzten End- oder Stirnflächen 3, die durch eine zylindrische, gewellte und dadurch streck- und stauchbare Seitenwand 4 verbunden sind. Zwei Stromdurchführungen 5, von denen nur eine in der Fig. gezeigt ist, erstrecken sich durch die untere Endfläche 3 der Zelle 1 und beaufschlagen jeweils eine von zwei Elektroden 6 im Innern der Zelle 1. Die Elektroden 6 und ein zwischen ihnen angeordneter, nicht dargestellter Elektrolyt funktionieren als eine wiederaufladbare elektrochemische Zelle, die als ein reversibler Gasgenerator 8 und -absorber fungiert, indem während des Ladevorgangs des Gasgenerators 8 gasförmiger Wasserstoff freigesetzt und beim Entladen verbraucht wird. D.h., ein dem Gasgenerator 8 von außen aufgeprägter Ladestrom bewirkt darin die Freisetzung von Wasserstoff in die Zelle 1 und, durch den vom Wasserstoff erzeugten Steuerdruck, eine von der aufgeprägten Ladungsmenge und dem zu überwindenden Druck außerhalb der Zelle 1 abhängige Streckung. Wenn hingegen ein Verbraucher an die Stromdurchführungen 5 der Zelle angeschlossen ist, fließt ein Entladestrom, der Wasserstoff wird wieder absorbiert und die Zelle 1 unter darauf einwirkendem Außendruck gestaucht.

Zellen dieser Art werden von der Fa. FRIWO Silberkraft, Duisburg, angeboten und sind z.B. in der Zeitschrift Elektor, 1/98, Seite 15 beschrieben. Sie erlauben bei einem Durchmesser und einer Länge der Zelle von unter 20 mm die Erzeugung von Stellkräften bis zu 60 N.

Der Gasgenerator 8 ist in der Zelle von einer Schutzhülle 7, in der Fig. als offener Zylinder dargestellt, umgeben, die eine übermäßige Stauchung der Zelle, die zu einer Beschädigung der Elektroden 6 führen könnte, verhindert, in dem sie gegebenenfalls die obere Endfläche 3 abstützt.

Fig. 2 zeigt die gleiche Zelle in einem gestauchten Zustand.

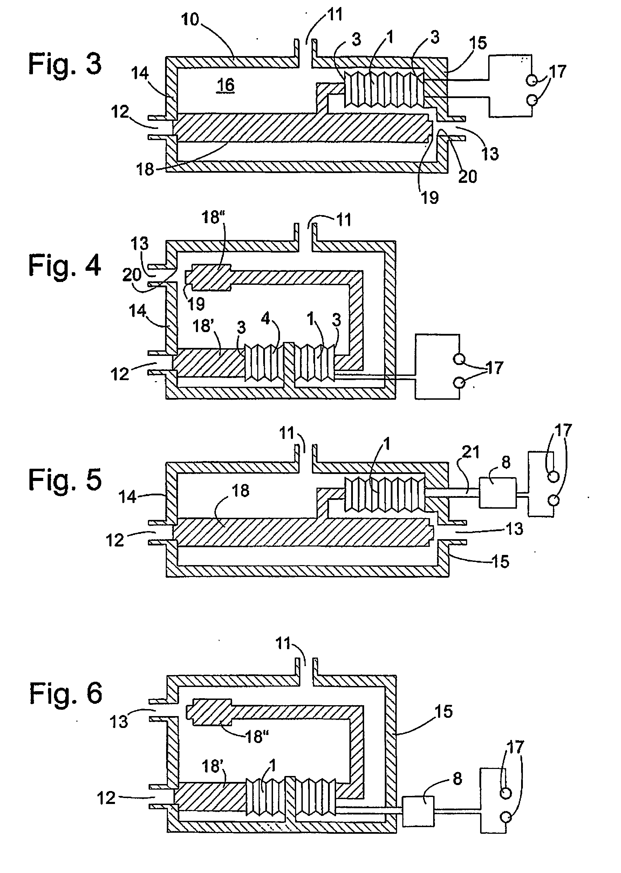

Ausführungsbeispiele von Mehrwegeventilen, die die in Figs. 1 und 2 gezeigte Zelle oder eine Variante von ihr verwenden, sind in den Figs. 3 bis 6 jeweils in einem schematisierten Schnitt gezeigt.

Das Mehrwegeventil der Fig. 3 hat ein Gehäuse 10 mit einem Eingang 11 und zwei Ausgängen 12, 13 an einander gegenüberliegenden Seitenwänden 14, 15 des Gehäuses 10.

In einer Kammer 16 im Innern des Gehäuses 10 ist eine Zelle 1 der in Fig. 1 und 2 gezeigten Art angeordnet. Eine ihrer Endflächen 3 ist mit der Seitenwand 15 fest verbunden, durch die sich auch die Stromdurchführungen der Zelle 1 zu zwei externen Anschlüssen 17 erstrecken. An die Anschlüsse 17 ist über einen nicht gezeigten Schalter selektiv eine Stromquelle zum Strecken der Zelle 1 oder ein Verbraucher zum Stauchen der Zelle 1 anschließbar. Die Anschlüsse 17 können auch unverbunden sein, um eine aktuelle Länge der Zelle 1 beizubehalten.

Ein zwischen den Seitenwänden 14, 15 verschiebbar gelagerter Körper 18 ist mit der zweiten Endfläche 3 der Zelle 1 starr verbunden. Der Körper 18 ist geringfügig kürzer als der Abstand zwischen den Seitenwänden 14, 15 der Kammer 16 und ist durch Strecken oder Stauchen der Zelle 1 zwischen zwei Anschlagpositionen bewegbar, in denen jeweils ein Schließorgan 19 an einem einem Ausgang 12 bzw. 13 zugewandten Ende des Körpers 18 einen Ventilsitz 20 dieses Ausgangs verschließt. Die Bewegungsfreiheit des Körpers 18 kann in der Größenordnung von zwei mm liegen. Fig. 3 zeigt den gestreckten Zustand der Zelle 1, in welchem der Körper 18 den von der Zelle 1 entfernten Ausgang 12 versperrt; durch Stauchen der Zelle 1 wird dieser Ausgang geöffnet und der der Zelle benachbarte Ausgang 13 verschlossen.

Bei der Ausgestaltung der Fig. 4 ist die Zelle 1 in einem mittleren Bereich ihrer Seitenwand 4 mit dem Gehäuse 10 des Ventils verbunden, und an beiden Endflächen 3 ist ein starrer Körper 18', 18" befestigt, von denen der eine 18' geradlinig auf den zugeordneten Ausgang 12 des Gehäuses zu verläuft und der andere 18" sich U-förmig gekrümmt zum zweiten Ausgang 13 erstreckt, der in der gleichen Seitenwand 14 wie der Ausgang 12 angeordnet ist. In dem in der Fig. gezeigten gestreckten Zustand der Zelle 1 versperrt das Schließorgan des Körpers 18' den Ventilsitz des Ausgangs 12, während das Schließorgan 19 des Körpers 18" vom Ventilsitz 20 des Ausgangs 13 getrennt ist. Wenn die Zelle durch Anschließen eines Verbrauchers an die Anschlüsse 17 gestaucht wird, rückt der Körper 18' vom Ausgang 12 ab und gibt ihn frei, während gleichzeitig der Körper 18" den Ausgang 13 verschließt.

Die Ausgestaltungen der Figs. 5 und 6 unterscheiden sich von denen der Figs. 3 bzw. 4 jeweils dadurch, dass der Gasgenerator 8 außerhalb der in der Kammer 16 montierten Zelle 1 angeordnet ist. Anstelle der Stromdurchführungen erstreckt sich jeweils eine Gasleitung 21 durch die Seitenwand 15 des Gehäuses zwischen der Zelle 1 und dem Gasgenerator 8. Die Funktionsweise der Ventile gemäß Figs. 5 und 6 ist die gleiche wie oben für die Figs. 3 und 4 beschrieben.

Die Mehrwegeventile gemäß Figs. 3 bis 6 eignen sich gut zum Schalten des Kältemittelstroms in einer Kältemaschine mit einem Verdichter und mehreren Verdampfern, da der typischerweise in dem Kältemittelkreis einer solchen Maschine herrschenden Druck von 8 bis 16 bar eine zuverlässige Stauchung des Balges 2 zu gewährleisten im Stande ist.

## Patentansprüche

1. Kältemaschine mit einem mehrere Verdampfer aufweisenden Kältekreislauf und einem ein Gehäuse (10) aufweisendes Mehrwegeventil, das mehrere Ein- und Ausgänge (11, 12, 13) und eine Kammer (16) mit mehreren jeweils einem Ein- oder Ausgang (12, 13) zugeordneten Sitzen (20) aufweist, wobei jedem Sitz (20) ein Schließorgan (19) zugeordnet ist und das den von einem einzelnen Verdichter im Kältemittelkreislauf kommenden Kältemittelstrom auf einen oder mehrere Verdampfer aufteilt, **dadurch gekennzeichnet, dass** eine unter Wirkung eines Steuerdrucks streck- und stauchbare Zelle (1), die an die Schließorgane (19) gekoppelt ist, um entsprechend einer Stauch- oder Streckbewegung einer Zelle (1) den zugeordneten Sitz (20) zu sperren oder freizugeben.

2. Kältemaschine nach Anspruch 1, **dadurch gekennzeichnet, dass** die Zelle (1) mit einem externen reversiblen Gasgenerator und -absorber (8) verbunden ist.

3. Kältemaschine nach Anspruch 1, **dadurch gekennzeichnet, dass** ein reversibler Gasgenerator und -absorber (8) in der Zelle (1) untergebracht ist.

4. Kältemaschine nach einem der vorhergehenden Ansprüche, **dadurch gekennzeichnet, dass** zwei in Streckrichtung entgegengesetzte Enden (3) der Zelle (1) an ein erstes bzw. ein zweites Schließorgan (18', 18") gekoppelt sind, und dass die Zelle (1) an einer zwischen den Enden (3) gelegenen Stelle mit dem Gehäuse (10) verbunden ist.

5. Kältemaschine nach Anspruch 4, **dadurch gekennzeichnet, dass** die dem ersten und zweiten Schließorgan (19) zugeordneten Ventilsitze (20) in einer gleichen Seitenwand (14) des Gehäuses angeordnet sind.

6. Kältemaschine nach einem der Ansprüche 1 bis 3, **dadurch gekennzeichnet, dass** von zwei in Streckrichtung entgegengesetzten Enden (3) der Zelle (1) eines mit dem Gehäuse (10) verbunden und das andere an ein erstes und ein zweites Schließorgan (19) gekoppelt ist.

7. Kältemaschine nach Anspruch 4 oder 6, **dadurch gekennzeichnet, dass** die dem ersten und zweiten Schließorgan (19) zugeordneten Ventilsitze (20) in einander gegenüber liegenden Seitenwänden (14, 15) des Gehäuses (10) angeordnet sind.

8. Kältemaschine nach Anspruch 7, **dadurch gekennzeichnet, dass** das erste und das zweite Schließorgan (19) einteilig verbunden sind.

9. Kältemaschine nach einem der Ansprüche 4 bis 8, **dadurch gekennzeichnet, dass** das erste und das zweite Schließorgan (19) starr mit ihrem Ende (3) der Zelle (1) verbunden sind.

10. Kältemaschine nach einem der vorhergehenden Ansprüche, **dadurch gekennzeichnet, dass** die Zelle (1) als Balg (2) ausgebildet ist.

## Claims

1. Refrigerating machine with a refrigerating circuit, which has several evaporators, and a multi-way valve, which comprises a housing (10) and which has several inlets and outlets (11, 12, 13) and a chamber (16) with several seats (20) each associated with a respective inlet or outlet (12, 13), wherein a closing element (19) is associated with each seat (20) and the refrigerant flow, which comes from a single compressor in the refrigerant circuit, is apportioned to one or more evaporators, **characterised in that** a cell (1), which is expansible and compressible under the action of a control pressure and which is coupled with the closing elements (19), in order to block or free the associated seat (20) in correspondence with a compression or expansion movement of a cell (1), is provided.

2. Refrigerating machine according to claim 1, **characterised in that** the cell (1) is connected with an external reversible gas generator and gas absorber (8).

3. Refrigerating machine according to claim 1, **characterised in that** a reversible gas generator and gas absorber (8) is accommodated in the cell (1).

4. Refrigerating machine according to one of the preceding claims, **characterised in that** two ends (3), which are opposite in expansion direction, of the cell (1) are coupled to a first and a second closing element (18', 18") respectively and that the cell (1) is connected with the housing (10) at a point between the ends (3).

5. Refrigerating machine according to claim 4, **characterised in that** the valve seats (20) associated with the first and second closing element (19) are arranged in the same side wall (14) of the housing.

6. Refrigerating machine according to one of claims 1 to 3, **characterised in that** of two ends (3), which are opposite in expansion direction, of the cell (1) one is connected with the housing (10) and the other is coupled to a first and a second closing element (19).

7. Refrigerating machine according to claim 4 or 6, **characterised in that** the valve seats (20) associated with the first and second closing element (19) are arranged in mutually opposite side walls (14, 15) of the housing (10).

8. Refrigerating machine according to claim 7, **characterised in that** the first and the second closing elements (19) are integrally connected.

9. Refrigerating machine according to one of claims 4 to 8, **characterised in that** the first and second closing elements (19) are rigidly connected with their end (3) of the cell (1).

10. Refrigerating machine according to one of the preceding claims, **characterised in that** the cell (1) is constructed as a bellows (2).

## Revendications

1. Machine frigorifique présentant un circuit d'agent réfrigérant qui comprend plusieurs évaporateurs et comprenant une soupape à voies multiples pourvue d'un boîtier (10) comportant plusieurs entrées et sorties (11, 12, 13) et une chambre (16) pourvue de plusieurs sièges (20) associés à chaque fois à une entrée ou sortie (12, 13), un organe de fermeture (19) étant associé à chaque siège (20) et distribuant le flux d'agent réfrigérant venant d'un compresseur individuel dans le circuit d'agent réfrigérant vers un ou plusieurs évaporateur/s, **caractérisée par** une cellule (1) pouvant être étirée et aplatie sous l'action d'une pression de commande, qui est couplée aux organes de fermeture (19) pour bloquer ou libérer le siège associé (20) de manière correspondante à un mouvement d'aplatissement ou d'étirement d'une cellule (1).

2. Machine frigorifique selon la revendication 1, **caractérisée en ce que** la cellule (1) est reliée à un générateur et absorbeur de gaz (8) réversible extérieur.

3. Machine frigorifique selon la revendication 1, **caractérisée en ce qu'**un générateur et absorbeur de gaz (8) réversible est logé dans la cellule (1).

4. Machine frigorifique selon l'une des revendications précédentes, **caractérisée en ce que** deux extrémités (3) de la cellule (1) opposées dans la direction d'étirement sont couplées à un premier resp. un second organes de fermeture (18', 18") et **en ce que** la cellule (1) est reliée au boîtier (10) en un point situé entre les extrémités (3).

5. Machine frigorifique selon la revendication 4, **caractérisée en ce que** les sièges de soupape (20) associés au premier et au second organes de fermeture (19) sont situés dans une même paroi latérale (14) du boîtier.

6. Machine frigorifique selon l'une des revendications 1 à 3, **caractérisée en ce qu'**une des deux extrémités (3) de la cellule (1) opposées dans la direction d'étirement est reliée au boîtier (10) et l'autre est couplée à un premier et un second organes de fermeture (19).

7. Machine frigorifique selon la revendication 4 ou 6, **caractérisée en ce que** les sièges de soupape (20) associés au premier et au second organes de fermeture (19) sont situés dans des parois latérales (14, 15) du boîtier (10) se faisant face.

8. Machine frigorifique selon la revendication 7, **caractérisée en ce que** le premier et le second organes de fermeture (19) sont reliés d'une seule pièce.

9. Machine frigorifique selon l'une des revendications 4 à 8, **caractérisée en ce que** le premier et le second organes de fermeture (19) sont reliés rigidement à leur extrémité (3) de la cellule (1).

10. Machine frigorifique selon l'une des revendications précédentes, **caractérisée en ce que** la cellule (1) est exécutée en tant que soufflet (2).
